# EUROPÄISCHE PATENTSCHRIFT

(11) **EP 2 246 207 B1**
(45) Veröffentlichungstag und Bekanntmachung des Hinweises auf die Patenterteilung: **29.05.2013**
(21) Anmeldenummer: 10171588.6
(22) Anmeldetag: 31.10.2007
(51) Int. Cl.: B60G 17/052, B60G 9/00, B60G 11/27, B62D 53/06, B64F 1/32

(54) **Flughafenschlepper mit Luftfederung**
Airport tow vehicle with pneumatic suspension
Remorqueur d'aéroport doté d'une suspension à air

(30) Priorität: 31.10.2006 DE 102006051466
(43) Veröffentlichungstag der Anmeldung: 03.11.2010
(62) Teilanmeldung aus: 07119778.4
(73) Patentinhaber: MULAG FAHRZEUGWERK Heinz Wössner GmbH & CO. KG, 77728 Oppenau (DE)
(72) Erfinder: Esser, Peter, 73104, Börtlingen (DE)
(74) Vertreter: Alber, Norbert

(56) Entgegenhaltungen:
- EP-A- 1 022 168
- EP-A- 1 258 406
- EP-A- 1 329 351
- EP-B- 0 954 453
- DE-C1- 19 845 925
- FR-A- 2 529 838
- GB-A- 940 684
- GB-A- 2 222 120

## Beschreibung

### I. Anwendungsgebiet

Die Erfindung betrifft Schlepper wie sie auf dem Flughafenvorfeld zum Ziehen von Gepäckwägen, Gangways, Hubplattformen und ähnlichem benutzt werden. Zum technischen Umfeld wird auf die EP 1 329 351 A1 verwiesen.

Unter einem Schlepper wird ein Fahrzeug verstanden, welches aufgrund Eigengewicht und Antriebsleistung primär zum Ziehen von Wägen dient, so dass es selbst keine Ladefläche besitzt oder zumindest nicht primär besitzt.

Darüber hinaus sind luftgefederte Fahrwerke auch bei Nutzfahrzeugen, z. B. Sattelzugmaschinen, etwa gemäß der EP 0 954 453 B1, bekannt, jedoch nicht für die gattungsgemäßen Vorfeldschlepper.

### II. Technischer Hintergrund

Derartige Schlepper weisen gegenüber anderen Fahrzeugen, auch anderen Nutzfahrzeugen, spezifische Besonderheiten auf:
- sie sind klein und besitzen dadurch eine geringe Spurbreite und geringen Achsabstand und hohen möglichen Lenkeinschlag, um sehr manövrierfähig zu sein,
- sie sind relativ schwer, häufig 5 bis 6 Tonnen Eigengewicht, um auch hohe angehängte Lasten ohne Schlupf an den Antriebsrädern ziehen und auch abbremsen zu können,
- die Bereifung besteht teilweise aus Vollgummi-Reifen und
- die Höchstgeschwindigkeit liegt relativ niedrig, meist bei ca. 30 km/h.

Auch der Untergrund, auf dem diese Schlepper fahren, ist spezifisch gestaltet:
Das Vorfeld eines Flughafens ist in der Regel prinzipiell befestigt, meist betoniert, und innerhalb der einzelnen Betonplatten so eben, dass es lediglich zu radfrequenten Mikroschwingungen im Fahrwerk kommt.

Größere Unebenheiten gibt es in der Regel nur
- in Form der kleine Rinnen darstellenden Dehnungsfugen zwischen den einzelnen Betonplatten und vor allem
- in Form von leistenförmigen Erhebungen, so genannten Speedreducern, mit dreieckigem oder trapezförmigem Querschnitt, die vor allem schnellere Fahrzeuge auf dem Vorfeld dazu zwingen sollen, ihr Tempo in bestimmten Bereichen des Vorfeldes zu verringern.

Bisher waren Vorfeld-Schlepper mit einfachen Blattfedern, meist aus Stahl, ausgerüstet. Da diese Blattfedern das hohe Eigengewicht des Schlepperaufbaus aufnehmen können mussten und auch die Seitenneigung begrenzt werden musste, war diese passive Federung so hart ausgelegt, dass vor allem bei einem Überfahren der Speedreducer mit annähernd 30 km/h sehr harte vertikale Schläge in den Aufbau des Fahrzeuges eingebracht wurden.

Gleiches gilt für Schläge in Längsrichtung beim Anfahren und Abbremsen des Schleppers mit angehängter Last. Diese harten Schläge führen einerseits zu Schäden am Fahrzeug, insbesondere der Fahrzeugelektrik und -elektronik, und sind andererseits für den auf dem Fahrzeug sitzenden Fahrer auf die Dauer sehr ungesund, da selbst von dem gefederten Fahrersitz diese Schläge nur teilweise aufgenommen werden. Luftfederungen sind bei anderen Luftkraftwagen bereits bekannt.

### III. Darstellung der Erfindung

### a) Technische Aufgabe

Es ist daher die Aufgabe gemäß der Erfindung, ein Fahrwerk, insbesondere eine Federung, für gattungsgemäße Schlepper zu schaffen, die trotz der vorhandenen Beschränkungen bei solchen Schleppern das Fahr- und Federungsverhalten verbessert.

### b) Lösung der Aufgabe

Diese Aufgabe wird durch die Merkmale des Anspruchs 1 gelöst. Vorteilhafte Ausführungsformen ergeben sich aus den Unteransprüchen.

Neben der Stahlfederung mittels Blatt- oder Schraubenfedern sind als höherwertige Federungen im Fahrzeugbau die hydropneumatische Federung und die Luftfederung bereits bekannt.

Da bei einem Schlepper weder eine Niveauregulierung benötigt wird noch die meisten Schlepper überhaupt ein Hydrauliksystem enthalten, wurde hiervon nicht die hydropneumatische Federung, sondern die Luftfederung gewählt, und zwar im Gegensatz zu der vorherrschenden Meinung, dass solche höherwertigeren Federungssysteme den Einsatz erst im Falle sehr unterschiedlicher Fahr- und Untergrundkonstellationen rechtfertigen:
Zwar sind die Fahr- und Untergrundsituationen bei Vorfeld-Schleppern auf dem Flughafen relativ genau vorhersehbar, jedoch die dabei auftretenden Extreme zueinander so unterschiedlich, dass nur die Luftfederung auch für sehr kleine Zeitfenster bedarfsgerechte, fahrzustandsabhängige Vertikalkräfte zwischen Rad und Aufbau bereitstellen kann, um den ansonsten vorhandenen Zielkonflikt zwischen Fahrverhalten und Fahrkomfort aufzulösen.

Im einfachsten Fall umfasst die Luftfederung einzelne Federbälge, die mit einem bestimmten Druck gefüllt und verschlossen sind, der während des Fahrbetriebs nicht verändert wird und folglich auch kein Ausgleichsvolumen oder keinen Kompressor im Schlepper benötigt. Lediglich in größeren zeitlichen Abständen wird das Vorhandensein des Nenndruckes überprüft und dieser Nenndruck gegebenenfalls - wenn Verluste aufgetreten sind - auf den Sollwert erhöht.

Bereits hierdurch kann ein Zugewinn an Komfort erreicht werden, da gegenüber einer Stahlfeder das Ansprechverhalten der Federung wesentlich verbessert werden kann, beispielsweise durch Festlegen einer anderen, dynamischeren Federkennlinie als dies bei Stahlfedern möglich wäre.

Wenn die Luftfederung zusätzlich die Möglichkeit bietet, den Druck in den einzelnen Federbälgen während des Fahrbetriebes zu verändern, und sei es auch nur manuell, indem ein Kompressor oder ein Ausgleichsbehälter mit höherem Druck Druckluft nachliefern kann, so können bereits hierdurch grobe Anpassungen des Federdruckes in Abhängigkeit von der Anhängelast, der gewünschten Fahrgeschwindigkeit, der Untergrundbeschaffenheit usw. eingestellt werden.

Weiterhin müssen aufgrund der spezifischen Besonderheiten bei einer Luftfederung in derartigen Schleppern auch mechanische Details spezifisch gestaltet werden:
Wegen des hohen Eigengewichts des Fahrzeuges und der geringen Spurbreite sind Längs-Führungslenker, wie sie ansonsten im Nutzfahrzeugbau bei Luftfederungen verwendet werden, alleine nicht ausreichend, sondern müssen vorzugsweise durch Quer-Führungslenker ergänzt werden, oder die Wirkrichtung der Luftfederbälge muss schräg nach unten außen geneigt vorgesehen werden, um eine ausreichende Querabstützung für das Verhindern der Seitenneigung des Aufbaus zu gewährleisten. Auch eine zusätzlich in Längsrichtung wirkende Drehmomentstütze, die mit jeweils einer der Anhängekupplungen verbunden ist, ist sinnvoll, um hierdurch die in die Anhängekupplung beim Bremsen und Beschleunigen eingebrachten Längskräfte der ungebremsten Anhänger zumindest teilweise über die Luftfederung aufnehmen zu können, und nicht als Längsbeschleunigungen in den Aufbau einzuleiten.

Da auf jedem Flugfeld sehr spezifische Unebenheiten, also z. B. Speedreducer einer bestimmten Flankenneigung und Höhe, am Schlepper ein bestimmter Raddurchmesser usw. vorliegen, können einzelne typische Fahrsituationen geprobt und mittels einer lernfähigen Steuerung auch eigenständig optimiert werden, wozu beispielsweise Beschleunigungssensoren am Aufbau des Schleppers dienen, die die tatsächlich in den Aufbau eingeleiten Beschleunigungskräfte messen und dadurch eine eigenständige Optimierung des Federungsverhaltens durch die Steuerung ermöglichen.

Durch die Lagerung der Räder bzw. der gesamten Radbaugruppen, also einschließlich der Bremsen, vorzugsweise nicht an einen Achsschenkel, wie bei Einzelradaufhängung üblich, sondern an den seitlichen äußeren Enden eines von der linken zur rechten Seite durchgehenden starren Achskörpers und vorzugsweise darüber hinaus dessen Abstützung über Luftfederbälge und die notwendigen Führungslenker an einem darüber befindlichen Grundkörper, der der Verschraubung der gesamten vormontierten Achsbaugruppe am Chassis dient, ist eine Vormontage der gesamten Achsbaugruppe und dann sehr schnelle Endmontage am Chassis des Fahrzeuges durch einfaches Verschrauben möglich.

Dies gilt sowohl für ungelenkte als auch gelenkte Räder und damit Achsbaugruppen.

Da im Gegensatz zu üblichen Lastfahrzeugen bei derartigen Schleppern das Eigengewicht der Konstruktion keine negative Rolle spielt sondern teilweise bewusst hoch gehalten wird, ist das Vorsehen eines solchen Grundkörpers, der meist aus einer durchgehenden massiven Platte oberhalb der Achsschenkel und damit auch eines eventuell vorhandenen Achskörpers besteht, kein Nachteil.

Selbst wenn die einzelnen Räder unabhängig voneinander einfedern sollen und deshalb auf einen durchgehenden Achskörper verzichtet wird, werden die mittels Längs- und Querführungslenkern einzeln geführten Räder wiederum mittels der Führungslenker am gleichen Grundkörper angelenkt, um wiederum eine vormontierbare Achsbaugruppe zu erhalten.

Damit die Längs- und Querlenker dabei nicht jeweils von ihrem Anlenkpunkt auf Seiten des Rades nicht nach oben zum Chassis oder zu dem plattenförmigen Grundkörper unter dem Chassis führen muss, kann von diesem plattenförmigen Grundkörper aus eine aufrecht stehende Platte als Schwert oder Grundkörper-Teil nach unten am chassisseitigen Anlenkpunkt für die Führungslenker dienen.

Zur Führung des Achskörpers dienen vorzugsweise je ein in Fahrzeuglängsrichtung verlaufender Längslenker und ein schräg zwischen Längs- und Querrichtung verlaufender Schräglenker, von denen zumindest einer möglichst tief am Achskörper oder Achsschenkel ansetzt, während sich die Luftfederbälge zwischen dem Achskörper bzw. Achsschenkel und der Unterseite des Grundkörpers befinden und diesen abstützen.

Bei Lösungen mit einem von der einen zur anderen Seite durchgehenden Achskörper kann die Längsführung durch einen einzigen zentralen Längslenker angreifend am Achskörper realisiert werden.

### c) Ausführungsbeispiele

Ausführungsformen gemäß der Erfindung sind im Folgenden beispielhaft näher beschrieben. Es zeigen:
- Fig. 1a:: eine insbesondere nicht lenkbare luftgefederte Achse in der Aufsicht
- Fig. 1b:: und Seitenansicht,
- Fig. 1c:: die Aufhängung des Achskörpers,
- Figuren 2:: ein lenkbares luftgefedertes Rad betrachtet in Fahrrichtung.

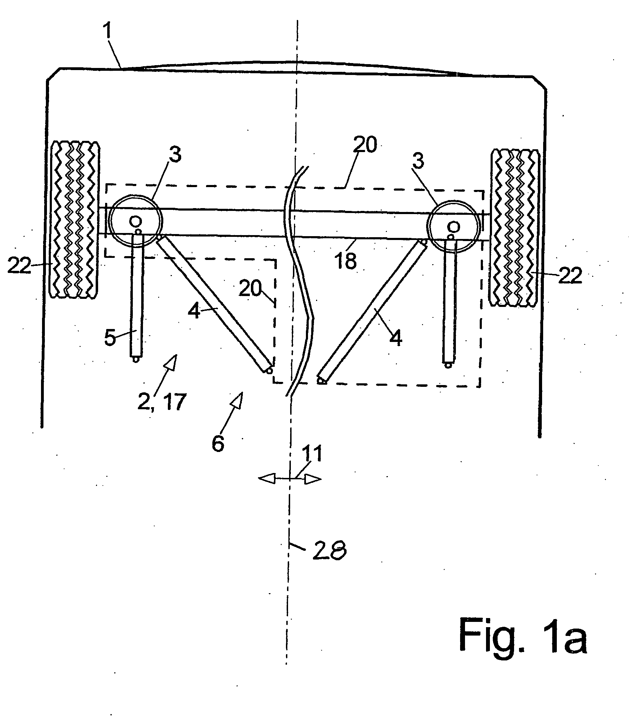

Fig. 1a zeigt in der Aufsicht ein Fahrwerk 2 mit einer Achse, in diesem Fall z. B. eine Hinterachse 6, die trotz Luftfederung über einen durchgehenden, starren in Querrichtung 11 verlaufenden Achskörper 18 verfügt:
An den Enden des Achskörpers 18 sind die Räder 22 drehbar gelagert, wobei es sich bei den Rädern üblicherweise um ganze Radbaugruppen, also einschließlich der Bremsen, handelt.

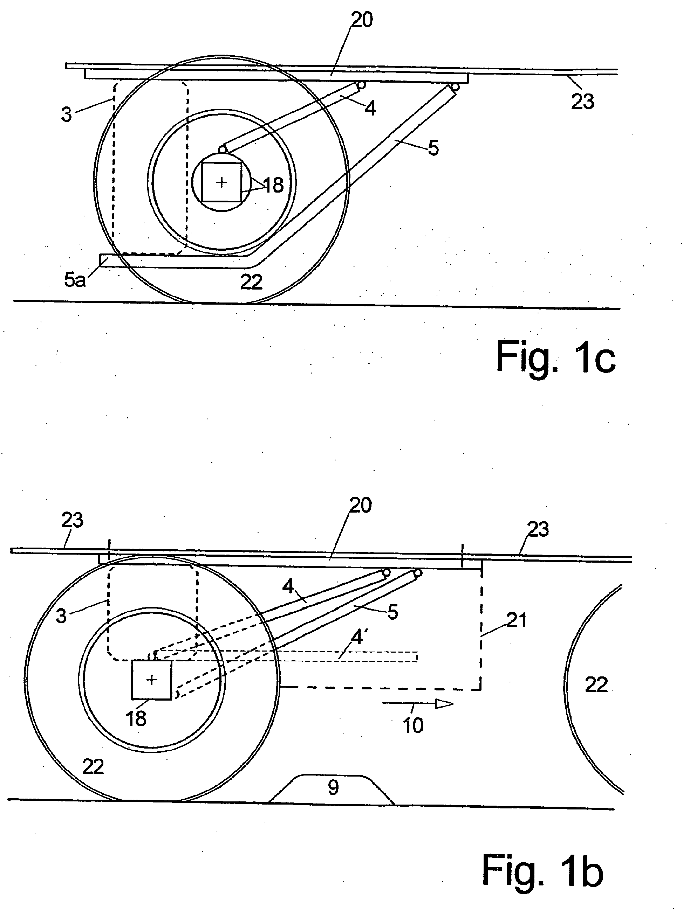

Wie die Seitenansicht der Achsbaugruppe gemäß Fig. 1a in Fig. 1b zeigt, befinden sich die beiden Luftfederbälge 3 zwischen dem Achskörper 18 und einem Grundkörper 20 der Achsbaugruppe, welche insbesondere als plattenförmiges Teil der Verschraubung der gesamten Baugruppe an der Unterseite des Chassis 23 dient. Wie Fig. 1b zeigt, ist jeder der beiden Luftfederbälge dabei direkt zwischen der Oberseite des Achskörpers 18 und der Unterseite des Grundkörpers 20 befestigt, und zwar gemäß Fig. 1a jeweils nahe der äußeren Enden des Achskörpers 18 und damit nahe der Räder 22.

Da aufgrund der Elastizität der Federbälge 3 dabei das Rad sowohl nach vorne und hinten als auch nach links und rechts verlagert werden könnte, bedarf es einer Längs- und Querführung in Form von Längsführungslenkern 5 und Querführungslenkern 4, die an den Enden des Achskörpers 18, also nahe an den Rädern, angreifen. Dabei verläuft der Längsführungslenker 5 in Fahrtrichtung zur Fahrzeugmitte des Fahrzeuges hin und ist dabei vorzugsweise nicht am Chassis 23, sondern an der Unterseite des Grundkörpers 20 befestigt und steigt deswegen schräg nach oben an.

Die Querführungslenker 4 führen in Aufsicht betrachtet entweder in Querrichtung 11, vorzugsweise jedoch schräg zur Längsachse, also der Längsmitte 28, verlaufend zur Längsmitte 28 des Fahrzeugs und sind dort am Grundkörper 20 und damit knapp unterhalb des Chassis 23 angelenkt oder deutlich tiefer liegend an dem vom Grundkörper 20 in Längsrichtung verlaufend nach unten ragenden Schwert 21 (Querführungslenker 4').

Fig. 1b zeigt auch den auf dem Untergrund aufgebrachten Speedreducer 9 in Form einer Schwelle kurz vor dem Auflaufen des Rades 22 auf diesen Speedreducer.

Fig. 1c zeigt als Alternative zur Fig. 1b die Aufhängung des Achskörpers 18, der hier einen runden Querschnitt besitzt, in einer wiederum beidseits nahe der Räder angeordneten Schwinge am Grundkörper 22, wobei die Schwinge gleichzeitig der Längsführungslenker 5 ist, der in Fahrzeuglängsrichtung verläuft. Der Längsführungslenker 5 ist über den Achskörper 18 hinaus mit einem freien Ende 5a verlängert, welches zum Aufsetzen des Luftfederbalges 3 zwischen diesem verlängerten Ende 5a und dem plattenförmigen Grundkörper 20 unter dem Chassis 23 dient.

Dabei ist ersichtlich, dass auf diese Art und Weise deutlich höhere Luftfederbälge eingesetzt werden können, ohne die Fahrzeughöhe zu vergrößern.

Die Schwinge dient dabei gleichzeitig als Längsführungslenker, während die Querführungslenker 4 in Querrichtung verlaufend oder schräg zur Querrichtung verlaufend zusätzlich am Achskörper 18 angreifen, wie anhand der Fig. 1a und 1b erläutert.

Aus diesen Figuren ist ersichtlich, dass auf diese Art und Weise die gesamte Achsbaugruppe vormontiert werden kann und zur Montage am Chassis lediglich der Grundkörper 20 am Chassis verschraubt werden muss und damit die Montage deutlich schneller vonstatten geht als bei Einzelradaufhängung.

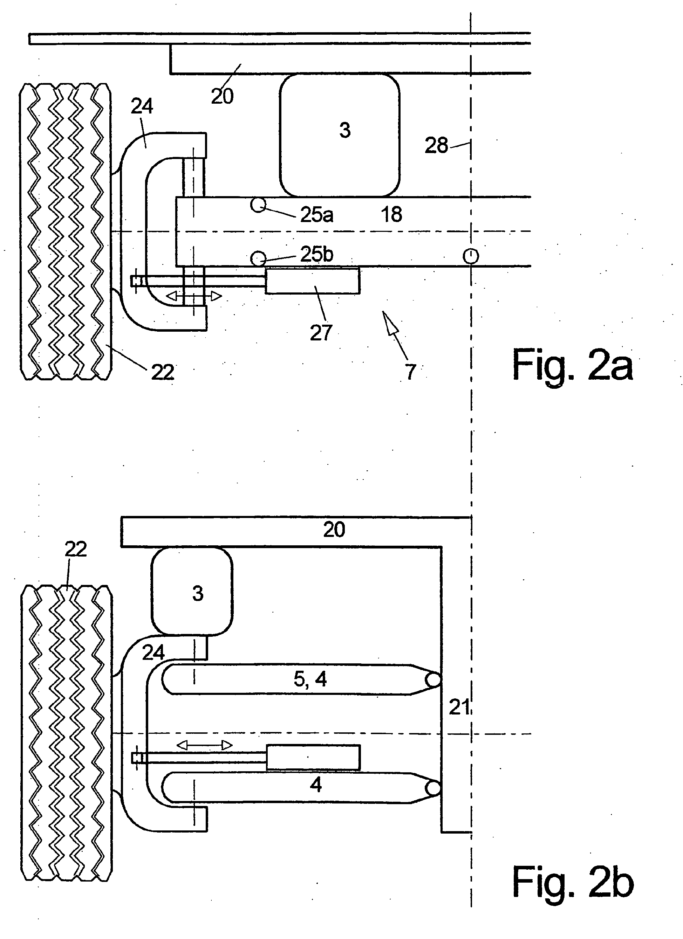

Fig. 2a zeigt eine Seite einer Achsbaugruppe z. B. eine Vorderachse 7, jedoch in Ausbildung für eine lenkbare Baugruppe:
Dabei ist in Fig. 2a der wie üblich C-förmige Achsschenkel 25 um eine aufrecht stehende Achse relativ zum Ende des Achskörpers 18 gelagert, den er teilweise umgreift. Vom Achsschenkel 24 etwas nach innen versetzt sitzt auf dem Achskörper 18 oder - siehe Fig. 1c - vor dem Achskörper 18 - der Luftfederbalg 3 zwecks Abstützung am Grundkörper 20.

In Fig. 2a sind auch die Aufnahmepunkte 25a,b am unteren und oberen Ende des Querschnittes des Achskörpers 18 für die Längs- und Führungslenker 5 zu sehen. Dabei ist auch ein Aufnahmepunkt 25a für den Längsführungslenker direkt auf der Längsmitte 28 zu sehen für den Fall, dass der gesamte Achskörper 18 nur über einen einzigen, mittig angeordneten Längsführungslenker abgestützt wird.

Am Achsschenkel 24 ist ferner der exzentrisch zur Achsschenkel-Achse angeordnete Lenkhebel 26 zu erkennen, an dem die Längsstange, beispielsweise betätigt vom Zylinder 27, angreift zwecks Auslenkung des Rades 22.

Fig. 2b zeigt eine Lösung mit Einzelradaufhängung, bei der wie bei Einzelradaufhängungen bekannt von dem oberen und unteren Ende des C-förmigen Achsschenkels 24 die Längsführungslenker und Querführungslenker, die in diesem Fall mit ihrem anderen Ende nicht direkt am Chassis, sondern an dem Grundkörper 20 der Achsbaugruppe, insbesondere dem davon als Schwert vertikal auf der Längsmitte des Fahrzeuges nach unten ragenden Schwert 21 angelenkt sind.

Am unteren Ende des Achskörpers 24 sind dabei vorzugsweise nicht nur ein Querführungslenker 4, sondern in der Aufsicht betrachtet zwei einerseits schräg nach vorn und andererseits schräg nach hinten ragende Querlenker 4 angeordnet, die somit vorzugsweise als Dreieckslenker ausgebildet sind, und in etwa horizontal verlaufen. Vorzugsweise ist am unteren Ende des oberen Endes des Achsschenkels 24 entweder ein Längslenker 5 oder wiederum zwei schräg verlaufende Querlenker 4 als Dreieckslenker angeordnet. Der Luftfederbalg 3 ist zwischen der Oberseite des Achsschenkels 24 und der Unterseite des plattenförmigen Grundkörpers 20 befestigt.

### BEZUGSZEICHENLISTE

- 1: Schlepper
- 2: Fahrwerk
- 3: Luft-Federbalg
- 4: Quer-Führungslenker
- 5: Längs-Führungslenker
- 6: Hinterachse
- 7: Vorderachse
- 9: Speedreducer
- 10: Fahrtrichtung
- 11: Querrichtung
- 17: Achsbaugruppe
- 18: Achskörper
- 20: Grundkörper
- 21: Schwert
- 22: Rad
- 23: Chassis
- 24: Achsschenkel
- 25a,b: Aufnahmepunkte
- 27: Zylinder
- 28: Längsmitte

## Patentansprüche

1. Schlepper (1) für Gepäckwägen, Gangways oder Hubplattformen auf dem Flughafenvorfeld
**dadurch gekennzeichnet, dass**
- das Fahrwerk (2) des Schleppers (1) eine Luftfederung mit Luftfederbälgen (3) aufweist, - die Luftfederung in komplett vormontierten ungelenkten und gelenkten Achsbaugruppen, insbesondere als jeweils autarke Einheit, integriert ist,
- jede Achsbaugruppe einen von der linken zur rechten Radaufhängung durchgehenden Achskörper (18) aufweist,
- jede Achsbaugruppe einen Grundkörper (20) zum Verschrauben an der Unterseite des Chassis (23) aufweist, der in der Mitte ein insbesondere in Fahrtrichtung (10) verlaufendes, nach unten frei endendes, Rahmenteil, insbesondere Schwert (21), aufweist, an dem die Führungslenker (4,5) abgestützt sind.

2. Schlepper nach Anspruch 1,
**dadurch gekennzeichnet, dass**
die Achskörper (18) unterhalb oder oberhalb, insbesondere unterhalb, des insbesondere gekröpften Längs-Führungslenkers (5) liegen.

3. Schlepper nach einem der vorhergehenden Ansprüche,
**dadurch gekennzeichnet, dass**
bei der ungelenkten Achsbaugruppe, insbesondere der Hinterachs-Baugruppe, die Räder (22) auf den seitlichen äußeren Enden des Achskörpers (18) gelagert sind, insbesondere direkt gelagert sind.

4. Schlepper nach einem der vorhergehenden Ansprüche,
**dadurch gekennzeichnet, dass**
im Wesentlichen in Fahrtrichtung (10) verlaufend wenigstens ein Längsführungslenker (5) an dem seitlichen äußeren Ende des Achskörpers (18) ansetzt und mit seinem anderen Ende in Richtung Fahrzeugmitte weisend am Chassis (23) befestigt ist, der insbesondere unterhalb der Radmitte an dem Achskörper (18) angreift.

5. Schlepper nach einem der vorhergehenden Ansprüche,
**dadurch gekennzeichnet, dass**
an der ungelenkten Achs-Baugruppe, insbesondere der Hinterachs-Baugruppe, jeweils ein Querführungslenker (4) angreift, der in der Aufsicht betrachtet schräg in Richtung Fahrzeugmitte, also bei einer Hinterachse nach vorne und bei einer Vorderachse nach hinten, verläuft.

6. Schlepper nach einem der vorhergehenden Ansprüche,
**dadurch gekennzeichnet, dass**
an den äußeren Enden des Achskörpers (18), insbesondere oberhalb der Radmitte, zwei in Längsrichtung beabstandete Querführungslenker (4) angreifen, die in der Aufsicht betrachtet insbesondere nach vorn und hinten verlaufend angeordnet sind und mit ihrem chassisseitigen Ende am Grundkörper (20) schwenkbar befestigt sind.

7. Schlepper nach einem der vorhergehenden Ansprüche,
**dadurch gekennzeichnet, dass**
die Luftfederbälge (3) zwischen den Enden entweder des Achskörpers (18), der über Luftfederbälge (3) gegenüber dem Grundkörper (20) abgestützt ist, bei einer ungelenkten Achse oder dem Achsschenkel bei einer gelenkten Achse und dem Chassis (23) angeordnet sind.

8. Schlepper nach einem der vorhergehenden Ansprüche,
**dadurch gekennzeichnet, dass**
bei einer ungelenkten Achs-Baugruppe, insbesondere Hinterachs-Baugruppe, die Befestigung des Achskörpers (18) am Grundkörper (20) indirekt mit Hilfe von beidseits der Längsmitte (28) des Schleppers (1) vorhandenen, in Längsrichtung verlaufenden, Schwingen erfolgt, und die Luftfederbälge (3) insbesondere auf der von der Schwinge abgewandten Seite des Achskörpers (18) zwischen einem Fortsatz der Schwinge und dem Grundkörper (20) angeordnet sind.

9. Schlepper nach einem der vorhergehenden Ansprüche,
**dadurch gekennzeichnet, dass**
bei einer gelenkten Achs-Baugruppe, insbesondere einer Vorderachs-Baugruppe, Achsschenkel am freien Ende des Achskörpers (18) schwenkbar angelenkt sind und die Luftfederbälge (3) zwischen dem Achskörper (18) und dem Grundkörper (20) angeordnet sind.

10. Schlepper nach einem der vorhergehenden Ansprüche,
**dadurch gekennzeichnet, dass**
der Achskörper (18) über nur einen zentralen Längslenker in Längsrichtung am Chassis (23) abgestützt ist, der insbesondere am oder unterhalb des unteren Endes Achskörpers (18) oder Grundkörpers (20) an diesem angreift.

## Claims

1. A tug (1) for luggage carts, gangways or lifting platforms on an airport ramp,
wherein a suspension (2) of the tug (1) includes an air suspension with air spring bellows (3),
wherein the air suspension is integrated in completely preassembled non-steered and steered axle assemblies, in particular respectively configured as a self-contained unit,
wherein each axle assembly includes an axle element (18) extending from a left wheel suspension to a right wheel suspension,
wherein each axle assembly includes a base element (20) for bolting to a bottom side of the frame (23), wherein the base element includes a centrally arranged frame element in a center of the base element, the frame element in particular extending in driving direction (10) and terminating freely at its bottom, in particular configured as a blade (21) at which suspension links (4, 5) are supported.

2. The tug according to claim 1,
wherein the axle elements (18) are arranged below or above, in particular below the in particular elbowed longitudinal suspension link (5).

3. The tug according to one of the preceding claims,
wherein the wheels (22) of the non-steered axle assembly, in particular the rear axle assembly, are supported on the lateral outer ends of the axle element (18), in particular directly supported.

4. The tug according to one of the preceding claims,
wherein at least one longitudinal suspension link (5) extending essentially in driving direction (10) is attached at the lateral outer end of the axle element (18) and attached with its other end at the frame (23) so that it is oriented towards a vehicle center,
wherein the longitudinal suspension link (5) is in particular attached below the wheel center at the axle element (18).

5. The tug according to one of the preceding claims,
wherein a respective transversal support arm (4) engages at the non-steered axle assembly, in particular the rear axle assembly,
wherein the transversal suspension link (4) extends in top view at a slant angle towards the vehicle center, thus in forward direction for a rear axle and in backward direction for a front axle.

6. The tug according to one of the preceding claims,
wherein two transversal suspension links (4) offset in longitudinal direction are attached at the outer ends of the axle element (18), in particular above the wheel center,
wherein the transversal suspension links (4) are arranged in top view extending in particular in forward and in backward direction and are pivotably supported with their frame side ends at the base element (20).

7. The tug according to one of the preceding claims,
wherein the air suspension bellows (3) are either arranged between the ends of the axle element (18) which is supported through air suspension bellows (3) relative to the base element (20) for an non steered axle, or for a steered axle between the axle journal and the frame (23).

8. The tug according to one of the preceding claims,
wherein for a non steered axle assembly, in particular a rear axle assembly, the attachment of the axle element (18) at the base element (20) is performed indirectly through swing arms provided on both sides of the longitudinal center (28) of the tug (1) and extending in longitudinal direction, and the air suspension bellows (3) are arranged in particular on the side of the axle element (18) that is oriented away from the swing arm between an extension of the swing arm and a base element (20).

9. The tug according to one of the preceding claims,
wherein for a steered axle assembly, in particular a front axle assembly, axle journals are pivotably attached at a free end of the axle element (18) and the air spring bellows (3) are arranged between the axle element (18) and the base element (20).

10. The tug according to one of the preceding claims,
wherein the axle element (18) is only supported in longitudinal direction at the frame (23) through a central longitudinal suspension link, wherein the central longitudinal suspension link engages the frame in particular at the lower end of the axle element (18) or below the lower end of the axle element (18) or of the base element (20).

## Revendications

1. Remorque (1) pour chariots à bagages, passerelles ou plateformes de levage sur l'aire de trafic aéroportuaire,
**caractérisée en ce que** le train de roulement (2) de la remorque (1) présente une suspension pneumatique avec des soufflets de ressort pneumatique (3)
- la suspension pneumatique est intégrée dans un groupe d'essieu articulé et non articulé complètement prémontré, en particulier en tant qu'unité autonome,
- chaque groupe d'essieu présente un corps de base (18) traversant de la suspension gauche à la suspension droite de roue,
- chaque groupe d'essieu présente un corps de base (20) pour le vissage sur la face intérieure du châssis (23) qui présente au milieu une partie de cadre s'entendant en particulier dans le sens de marche (10) se terminant librement vers le bas, en particulier une barre (21) contre lequel s'appuient les bras de guidage (4, 5).

2. Remorque selon la revendication 1,
**caractérisée en ce que** les corps d'essieu (18) se trouvent en dessous ou au-dessous, en particulier en dessous du bras de guidage (5) longitudinale en particulier coudée.

3. Remorque selon l'une des revendications précédentes,
**caractérisée en ce que** dans le cas de groupes d'essieux non articulés, en particulier les groupes d'essieux arrière, les roues (22) sont logées sur les extrémités externes latérales du corps d'essieu (18), en particulier logées directement.

4. Remorque selon la revendication 1,
**caractérisée en ce qu'**essentiellement dans le sens de la marche (10) au moins une barre de guidage longitudinale (5) est placée sur l'extrémité latérale externe du corps d'essieu (18) et est fixée à son autre extrémité en direction du milieu du véhicule sur le châssis (23), qui s'applique en particulier en dessous du milieu de roue sur le corps d'essieu (18).

5. Remorque selon l'une des revendications précédentes,
**caractérisée en ce que** sur le groupe d'essieux non articulés, en particulier du groupe d'essieux arrière vient s'appliquer une barre de guidage transversale (4) qui observée dans une vue de dessus s'étend de manière inclinée en direction du milieu de véhicule donc pour un essieu arrière vers l'avant et pour un essieu avant vers l'arrière.

6. Remorque selon l'une des revendications précédentes,
**caractérisée en ce que** sur les extrémités externes du corps d'essieux (18), en particulier au-dessus du milieu de la roue, s'appliquent deux barres de guidage transversales (4) distancées dans le sens longitudinale et qui sont disposées observé en vue de dessus en particulier en s'étendant vers l'avant et l'arrière et sont fixées par leur extrémité côté châssis sur le corps principal (20) de manière pivotante.

7. Remorque selon l'une des revendications précédentes,
**caractérisée en ce que** les soufflets de ressort pneumatiques (3) sont disposés entre les extrémités soit du corps axial (18) qui prend appui par des soufflets de ressort pneumatiques (3) par rapport au corps de base (20), dans le cas d'un essieu non articulé ou de la branche d'essieu dans le cas de l'essieu articulé et du cassis (23).

8. Remorque selon l'une des revendications précédentes,
**caractérisée en ce que** dans le cas d'un groupe d'essieux inarticulés, en particulier d'un groupe d'essieux arrière, la fixation du corps d'essieux (18) s'effectue sur le corps principal (20) de manière indirecte à l'aide de balanciers s'étendant dans la direction longitudinale se trouvant indirectement de part et d'autres du milieu longitudinal (28) de la remorque (1) et les soufflets de ressort pneumatiques (3) sont disposés en particulier sur la partie détournée du balancier, du corps d'essieu (18) entre un prolongement du balancier et du corps de base (20).

9. Remorque selon l'une des revendications précédentes,
**caractérisée en ce que** dans le cas du groupe d'essieux articulés en particulier d'un groupe d'essieux avant, des branches d'essieux sont articulées sur l'extrémité libre du corps d'essieux (18) de manière pivotante et les soufflets de ressort pneumatiques (3) sont disposés entre le corps d'essieux (8) et le corps de base (20).

10. Remorque selon l'une des revendications précédentes,
**caractérisée en ce que** le corps d'essieux (18) prend appui par seulement un bras de guidage central longitudinal dans la direction longitudinale sur le cassis (23) qui s'applique en particulier sur ou en dessous de l'extrémité inférieure du corps axial (18) ou du corps de base (20).
